# EUROPEAN PATENT APPLICATION

(11) **EP 4 546 061 A1**
(43) Date of publication of application: **30.04.2025**
(21) Application number: 23205557.4
(22) Date of filing: 24.10.2023
(51) Int. Cl.: G05B 15/02, G05B 13/02

(54) **BUILDING AUTOMATION SYSTEM AND METHOD FOR AUTOMATICALLY CONTROLLING THE FACILITY OF A BUILDING**

(71) Applicant: ABB SCHWEIZ AG, 5400 Baden (CH)
(72) Inventor: ALEKSY, Markus, 67065 Ludwigshafen (DE); BORRISON, Reuben, 68782 Brühl (DE)
(74) Representative: Maiwald GmbH

(57) **Abstract**

The present invention relates to a building automation system (10) for automatically controlling the facility of a building. The building automation system (10) comprises a data base (14), for storing past data, comprising event data, sensor data, user context data (30) and actions manually created and/or predefined by the user (34) in relation to this data. Further, a communication unit (22) for getting sensor data of at least one sensor (26a, 26b, 26c) of the building and user context data (30), and an actuator control unit (42) for controlling at least one actuator (46a, 46b, 46c) of the building are provided. The building automation system (10) further comprises a proposal unit (38) for outputting recommended actions to the user (34) and receiving feedback of the user (34) thereto

In addition a computer implemented machine learning model (18) and/or process model (50) created via data mining is described, for generating action recommendations for the user (34) and control commands for the actuator control unit (42).

## Description

### FIELD OF THE INVENTION

The present invention relates to a building automation system for automatically controlling the facility of a building. The invention further relates to a method for automatically controlling the facility of the building.

### BACKGROUND OF THE INVENTION

Nowadays buildings usually have a lot of devices and functions which can be controlled by the user. In order to increase the comfort of a user of the building usually a building automation system can be used. With this automation system a lot of regulation and controlling of the devices can be automatically performed. In order to program and adjust the building automation system to the needs of the user and the devices of the building a lot of time is necessary. Recently several solutions are proposed to reduce the programming and the adjusting process of such a building automation system.

Prior art EP 3 268 821 B1 discloses a method for a building automation system. Data from many buildings is used to machine train a cascade of classifiers. The cascade learns to classify in layers that relate to each other. One classifier identifies one characteristic, and the other classifier uses the identified characteristic to identify another characteristic. For example, a cascade learns to classify buildings, efficiency, or cost associated with particular building automation systems (e.g., building A has increased heating cost), to classify the fault leading to the cost (e.g., hot water supply temperature causes increased cost), and to classify the source of the fault (e.g., valve position or valve) in a cascade. The resulting machine-learnt cascade is applied to data for any number of buildings.

### SUMMARY OF THE INVENTION

The problem to be solved by the present invention is to provide a building automation system for automatically controlling the facility of building, which requires less efforts for the user and which has a high flexibility. Further, a method should be proposed for controlling such a building automation system, solving these objectives.

The problem is solved by a building automation system for automatically controlling the facility of the building having the features of claim 1. The problem is further solved by a method for automatically controlling the facility according to claim 5 and a method for generating a model for building automation system according to claim 8. Preferred embodiments of the invention are specified in the dependent claims.

According to the invention a building automation system for automatically controlling the facility of a building is proposed. The building automation system comprises a data base, for storing past data, comprising event data, sensor data, user context data and actions manually created and/or predefined by the user in relation to this data. Further, a communication unit is provided for getting sensor data of at least one sensor of the building and user context data, and an actuator control unit is provided for controlling at least one actuator of the building. The building automation system further comprises a proposal unit for outputting recommended actions to the user and receiving feedback of the user thereto, and a computer implemented machine learning model and/or process model created via data mining, for generating action recommendations for the user and control commands for the actuator control unit.

The expression building thereby comprises residential buildings as well as commercial buildings like for example offices. The facility of a building thereby comprises devices or installations, like e.g., sunshades, lights, ventilation, air conditioner and heating, which can be controlled by the building automation system. For controlling the facility past data is necessary. This data is stored on a data base of the automation system. The data also comprises event data which refers to occasions when something happens or occurred in the building. Such an event that could be e.g. a specific wind speed value, a time when the user leaves or enters an office, the holiday time or a business trip of the user, a weekend time in an office, or an upcoming thunderstorm forecasted in the night.

Under the expression user context data, it has to be understood that this data comprises data which describes the user, or which affects the user respectively characterizes the situation of the user. The data thereby can comprise external data which have to be gained e.g., from the Internet. Such data thereby may comprise data relating to e.g., the gender, to public holidays, to business trips of the user, vacations in the calendar or the weather forecast. These data thereby influence the controlling of the facility of the building. Under the expression action has to be understood that this refers to a change of an actual status of the facility. This could be that e.g., the sunshades are adjusted, or the setting of the air-conditioner is changed. These actions thereby can be performed manually by the user or automatically.

For the ease of the user, it is possible that the user may define values or events when specific actions should be generated. These values or events are thereby predefined by the user. Apart from the usual sensors provided for the building, a sensor is provided for receiving the user commands in response to the action recommendations of the proposal unit. The proposal unit is capable of formulating and outputting such action recommendations to the user. These action recommendations may comprise proposals like e.g., adjusting the air-conditioner or adjusting the sunshades. These recommendations may directly be issued by the proposal unit or also can be sent to an e.g., computer or a mobile phone of the user. The proposal unit is adapted to receive the feedback to the recommended actions of the user. The user thereby can accept or deny the respective recommended actions. The user further can give instructions to the proposal unit for performing specific actions.

According to the invention these action recommendations are generated by a computer implemented machine learning model and/or a process model created via data mining. In other words, the appropriate action recommendation is either trained or extracted from past data. Accordingly, the respective actions need not to be programmed to the building automation system. Thereby, the time and the effort of the user and/or an installer for adjusting the building automation system is reduced. As the machine learning model or the process model extract the workflow patterns from the behavior of the user, the building automation system has a high flexibility to adapt the action recommendations to the new behavior of the user. This new behavior of the user thereby needs not to be programmed by the user. In other words, it is learnt by the building automation system.

In a preferred embodiment of the invention, the machine learning model is a trained machine learning model, trained by data of the usage building. The usage building thereby is the building where the machine learning model should be implemented. The machine learning model is therefore already pre-trained before being implemented to the building automation system. Therefore, time and effort for the user can be reduced to generate sufficient training data for the building automation system. As the machine learning model is trained on the usage building a high accuracy of generated action recommendations can be achieved.

In a further preferred embodiment, the machine learning model is a pre-trained model, trained by data of other buildings. This pre-trained model thereby can be provided to the building automation system of the usage building. The building automation system merely has to learn the speciality of the usage building and the behaviour of the user. However, general action recommendations which are similar for different buildings therefore need not to be trained. The building automation system therefore can be used with a high degree of comfort for user more quickly. A proceeding data collection in the usage building therefore is not necessary. As this pre-trained model can be the same for many building automation systems, time and effort for collecting data in the special usage building can be heavily reduced.

Advantageously, a selection unit is provided, for evaluating the recommendations of the machine learning model and the process model based regarding the previous probability of correctness of the recommendations of each model before the recommendation with the highest previous probability of correctness then is given to the user. The selection unit thereby rates the given action recommendations of each model with respect to the input given by the user. The model which gives more correct action recommendations to the user thereby will be selected by the selection unit to give action recommendations to the user. The rate of correct action recommendations given to the user thereby can be increased so that the comfort of the user is approved.

Although, the selection unit can rate the action recommendations of the models of all given action recommendations, it is also possible that the action recommendations for classified actions can be rated. In other words, for each class either the process model or the machine learning model may have the highest accuracy. The accuracy of the action recommendations given to the user thereby can be further increased.

Preferably, a natural language processing unit is provided, for processing the natural language input of the user. By using the natural language processing unit, it is possible to orally communicate with the user. The user thereby also can provide the instructions by speaking with the system. The user thereby needs not to accept or deny action recommendations at a special device. The interaction of the user with the building automation system thereby can be simplified. Further, the comfort for the user is increased.

The problem underlying the present invention is further solved by the method for automatically controlling the facility of a building with a building automation system. The method comprises the steps of inputting of data in a machine learning model and/or a process model created via data mining, the data comprising actual event data, actual sensor data, actual user context data, and actions manually created and/or predefined by the user in relation to specific data values, in the automation system. In a next step, action recommendations for the user are generated with the machine learning model and/or the process model. Further, actuators of the building are controlled, if the actual data matches with predefined values of the user. The method further comprises the steps of outputting action recommendations for the user if no predefined values are provided for the actual data and controlling actuators of the building in line with the user's input.

Predefined values are values for which associated action has been specified, which has to be undertaken by the method. By using these predefined values, the building automation system does not provide the user with an action recommendation. The comfort for the user therewith is increased. In particular, in such a case the user needs not to interact with the system. The method for automatically controlling the facility of the building essentially provides the same advantages and effects as described to building automation system.

In a further advantageous development, the action recommendation of the process model and the machine learning model are evaluated regarding the previous probability of correctness of the recommendations of each model, before the recommendation with the highest previous probability of correctness then is given to the user. With this evaluation the rate of correct action recommendations given to the user can be improved. This method step thereby is conducted in the selection unit. Accordingly, this method step has the advantage and effect as described to the selection unit.

In a preferred embodiment, the input data are generated from the users input via a natural language processing. By using a natural language processing, it is not necessary for the user using a special programming language. The instructions into the building automation system therefore can be enter orally or by e.g. keyboard in natural language. The comfort of the user thereby can be increased. Further it is much easier for the user to provide the instructions to the building automation system.

The invention further proposes a method for generating a model for the building automation system for automatically controlling the facility of the building. The method comprises the steps of providing past data, comprising event data, sensor data, user context data and actions manually created and/or predefined by the user in relation to this data, and supplying the data to a model creating system, for creating a model so that the model outputs action recommendations for the user and/or executing of actions. By using past data with the associated action recommendation, respectively the action manually performed by the user the training dataset can be easily provided. Therefore, time for creating the training dataset can be saved, so that the training data can be economically provided. With the model creating system the model for the building automation system can be created in an easy way.

In a preferred embodiment, for the model creating system a machine learning system is used, which is trained by the data. The training thereby comprises the steps of comparing the determined action recommendations with the action recommendation associated with the past data. In a next step the deviations of the determined action recommendations from the action recommendation associated with the past data are evaluated with a cost function. In a further step, parameters characterizing the behavior of the machine learning model are adapted with the aim that further processing of the past data by the machine learning system is expected to improve the evaluation by the cost function. With the use of a machine learning system for the creating system, a model can be created generating action recommendations having a high rate of correctness and which is able to be flexible adapted to changing conditions.

A preferred embodiment specifies that for the model creating system a data mining system is used, by which from similar past data and associated action recommendations, action recommendations for the actual data are extracted. The process of data mining has the advantage that, compared to the machine learning model, a more transparent model for the user is provided. In other words, for the user it is much easier to derive, why the system gives the respective recommendations. Apart from this, in comparison to the machine learning, the data mining requires less data for creating a process model.

According to an advantageous embodiment, the model during usage operation is further adapted by feedback information of a user. By adapting the model by feedback information of a user the model can be adapted and improved more quickly. By this feedback information, with increasing operation time, the accuracy of the action recommendations can be increased.

Preferably, the data is gathered from different buildings and/or of the usage building. As there are many processes in buildings, which are the same for each building, it is possible to use the data from other buildings. By gathering data from different buildings, it is possible to provide a system without a predefined training period. It is merely necessary to adapt the process model respectively the machine learning model to the preferences of the user. By using the data of the usage building, the process model respectively the machine learning model can be adapted more accurate to the usage building.

In particular, the method described above may, for example, be computer-implemented and thus embodied in software. The invention therefore also relates to a computer program comprising machine-readable instructions which, when executed on one or more computers, cause the computer or computers to perform the described method.

Similarly, the invention also relates to a non-transitory storage medium and/or a download product comprising the computer program. A download product is a digital product that is transferable via a data network, i.e., downloadable by a user of the data network, and that can be offered for sale, for example, in an online store for immediate downloading.

The computer program can be run on one or more computers. Accordingly, the computer can be a stationary computer or several computers in a cloud.

The above aspects and examples will become apparent from and be elucidated with reference to the embodiments described hereinafter.

### BRIEF DESCRIPTION OF THE DRAWINGS

The subject matter of the Invention will be explained in more details in the following description illustrated in the drawings, in which:
- Figure 1: Building automation system for automatically controlling the facility of the building according to a first embodiment of the invention,
- Figure 2: Building automation system for automatically controlling the facility of the building according to a second embodiment of the invention,
- Figure 3: Method for automatically controlling the facility of the building with a building automation system according to an embodiment of the invention,
- Figure 4: Method for generating a model for a building automation system for automatically controlling the facility of the building according to a first embodiment of the invention, and
- Figure 5: Method for generating a model for a building automation system for automatically controlling the facility of the building according to a second embodiment of the invention.

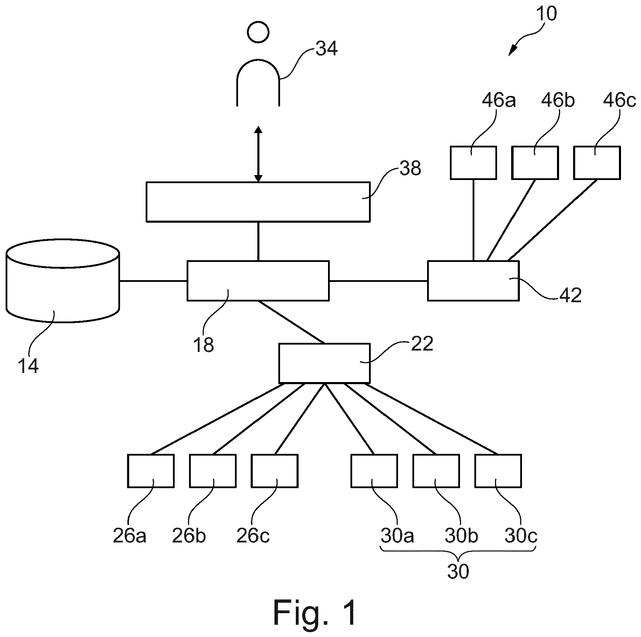

Figure 1 shows a building automation system 10 for automatically controlling the facility of the building according to a first embodiment of the invention. The building automation system 10 comprises a database 14 for storing past data. According to this embodiment the database 14 is connected and communicates to a computer implemented machine learning model 18. The machine learning model 18 thereby can be provided on a computer of the building automation system 10. This computer with the machine learning model 18 thereby communicates with a communication unit 22 of the building automation system 10. The communication unit 22 thereby is able to read sensor data from sensors 26a, 26b, 26c of the building. In this embodiment exemplarily three sensors 26a, 26b, 26c. Such sensors 26a, 26b, 26c thereby could be sensors 26a, 26b, 26c measuring the windspeed, the room temperature or the incident light.

The communication unit 22 further communicates with different sources 30a, 30b, 30c for receiving user context data 30. The user context data 30 thereby can be received from e.g., the calendar of the user 34, the weather forecast or the public holidays. This information can be received from the Internet. In this figure exemplarily merely three sources 30a, 30b, 30c are shown. The information received from the sensors 26a, 26b, 26c and the user context data 30 are provided to the machine learning model 18. From this data and the data from the database 14 the machine learning model 18 generates an action recommendation for the user 34. This action recommendation is provided to a proposal unit 38. The proposal unit 38 thereby outputs the action recommendation to the user. The user 34 thereby can accept or deny the recommended actions.

In view of the feedback of the user 34 the machine learning model 18 generates respective control commands and forward these commands to an actuator control unit 42. The actuator control unit 42 thereby controls different actuators 46a, 46b, 46c of the building. In this figure exemplarily three actuators 46a, 46b, 46c are shown. However, it goes without saying that normally much more actuators 46a, 46b, 46c than three are installed in a building.

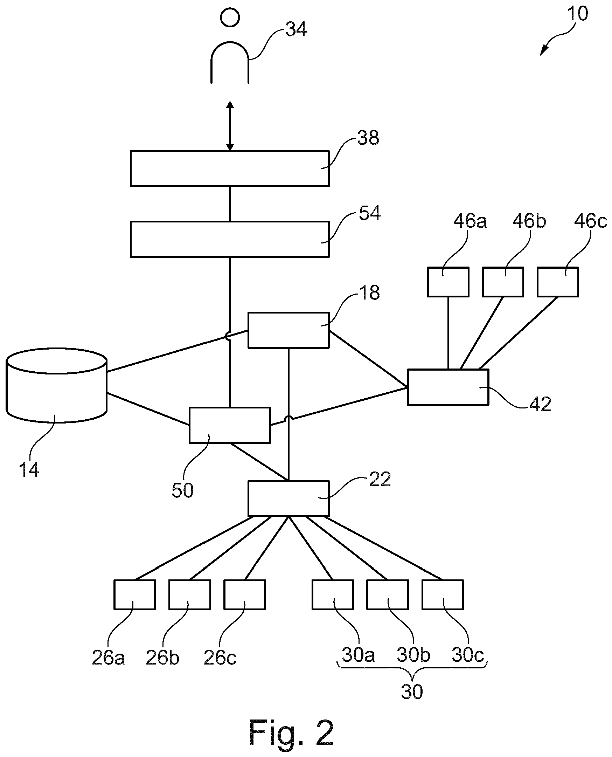

In figure 2, a building automation system 10 for automatically controlling the facility of the building according to a second embodiment of the invention is shown. The embodiment in figure 2 thereby differs to the embodiment shown in figure 1 in that additionally to the machine learning model 18 also a process model 50, generated via data mining, is provided. Both models 18, 50 thereby are running parallel. Each of these models 18, 50 are thereby connected to the communication unit 22, the database 14, and the actuator control unit 42. In contrast to the embodiment in figure 1 the machine learning model 18 and the process model 50 are not directly connected to the proposal unit 38. Between both models 18, 50 and the proposal unit 38, a selection unit 54 is provided, receiving the action recommendations of both models 18, 50.

The selection unit 54 evaluates the recommendations of both models 18, 50 in respect to the past correctness of the recommendations. The action recommendation of the model 18, 50 with the highest correctness probability for the user 34 in the past is selected and transmitted to the proposal unit 38. By doing so a high correctness of the action recommendation can be achieved, so that a rate of action recommendations denied by the user 34 can be reduced.

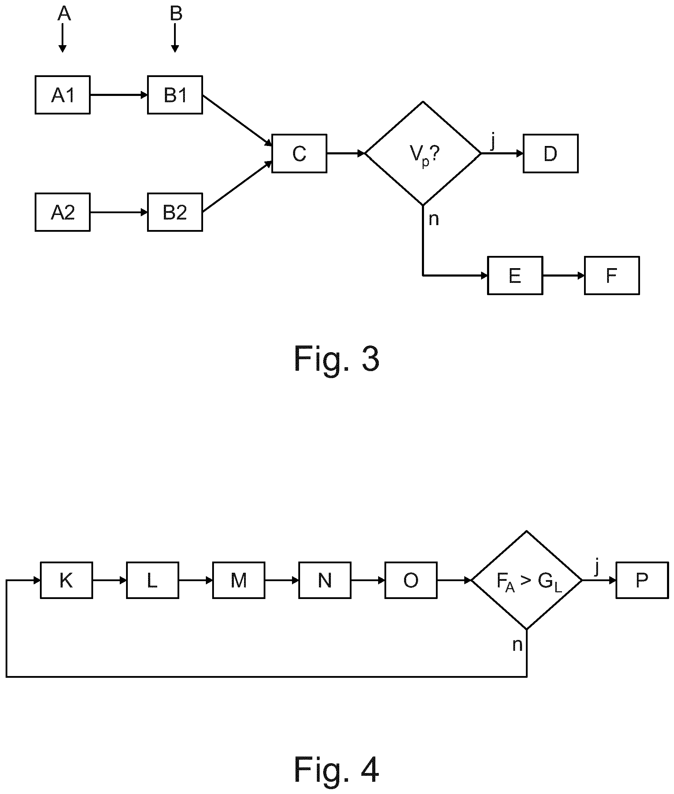

Figure 3 shows a method for automatically controlling the facility of the building with a building automation system 10 according to an embodiment of the invention. In a first step A, data is input A1 in the machine learning model 18 and input A2 in the process model 50. After this, in a second step B in both models 18, 50, action recommendations for the user 34 are generated B1, B2. In a further step C, the action recommendations of both models 18, 50 are evaluated and the recommendation with the highest previous probability of correctness is then compared with predefined values V_{P} of the user. In the case of available predefined values V_{P}, no action recommendation is given to the user 34 and the actuators of the building are controlled D in line with the action recommendation. However, if no predefined values V_{P} are provided for the actual data, the action recommendation is outputted E to the user 34. In the last step F, according to the users 34 input the actuators 46a, 46b, 46c of the building are controlled.

Figure 4 shows a method for generating a model for a building automation system 10 for automatically controlling the facility of the building according to a first embodiment of the invention. The method for generating a model shown in figure 4 thereby relates to a generation of machine learning model 18. In a first step K of the method, past data is provided. The past data thereby comprises event data, sensor data, user context data 30 and actions manually created or predefined by the user in relation to this data. This past data in a second step L is supplied to the model creating system, which in the present case is the machine learning system. With this model creating system a machine learning model 18 is created for generating action recommendations for the user 34 and/or executing of actions.

In a next step M, the action recommendations determined by the model 18 are compared with the action recommendations associated with the past data. After this, the deviations N of the determined action recommendations and the action recommendations associated with the past data are evaluated with the cost function. Further, parameters characterising the behaviour of the machine learning model are adapted O with the aim that further processing of the past data by the machine learning system is expected to improve the evaluation by the cost function. Finally, the factor F_{A} specifying the accuracy is compared with a limit value G_{L}. If the accuracy factor F_{A} is below the specified limit value G_{L}, the training is repeated until this condition is fulfilled. Then the generating of action recommendations with the machine learning model is released P. In a further option it is also possible to consider the training progress of the machine learning system and to stop the training before the machine learning system starts overfitting.

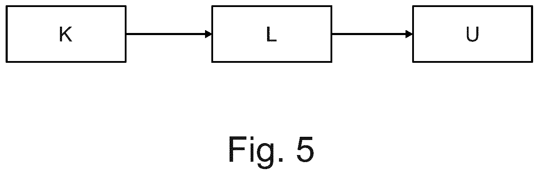

Figure 5 shows a method for generating a model for a building automation system 10 for automatically controlling the facility of a building according to a second embodiment of the invention. The method for generating a model shown in figure 5 relates to the generation of the process model 50 created via data mining. In a first step K of the method, past data is provided to the data mining system. The past data thereby comprises event data, sensor data, user context data 30 and actions manually created and/or predefined by the user 34 in relation to this data. This past data in a second step L is supplied to the model creating system, which in the present case is the data mining system. From this data the data mining system in a next step U generates the process model 50 for the building.

### List of reference numbers

- 10: building automation system
- 14: database
- 18: computer implemented machine learning model
- 22: communication unit
- 26a: sensor
- 26b: sensor
- 26c: sensor
- 30: user context data
- 30a: source user context data
- 30b: source user context data
- 30c: source user context data
- 34: user
- 38: proposal unit
- 42: actuator control unit
- 46a: actuator
- 46b: actuator
- 46c: actuator
- 50: process model
- 54: selection unit
- V_{P}: predefined values
- A: Input of data
- A1: Input of data machine learning model
- A2: Input of data process model
- B: Generating action recommendations
- B1: Generating action recommendations machine learning model
- B2: Generating action recommendations process model
- C: Evaluating the action recommendations
- D: Controlling actuators
- E: Outputting action recommendations
- F: Controlling actuators
- K: Providing past data
- L: Supplying the data
- M: Comparing the determined action recommendations
- N: Evaluating the deviations
- O: Adapting parameters
- P: Releasing machine learning model
- U: Generating the process model
- F_{A}: accuracy factor
- G_{L}: limit value

## Claims

1. Building automation system (10) for automatically controlling the facility of a building, comprising:
- A data base (14), for storing past data, comprising event data, sensor data, user context data (30) and actions manually created and/or predefined by the user (34) in relation to this data,
- A communication unit (22) for getting sensor data of at least one sensor (26a, 26b, 26c) of the building and user context data (30),
- An actuator control unit (42) for controlling at least one actuator (46a, 46b, 46c) of the building,
- A proposal unit (38) for outputting recommended actions to the user (34) and receiving feedback of the user (34) thereto, and
- A computer implemented machine learning model (18) and/or process model (50) created via data mining, for generating action recommendations for the user (34) and control commands for the actuator control unit (42).

2. Building automation system (10) according to claim 1, **characterized in that** the machine learning model (18) is a trained machine learning model, trained by data of the usage building.

3. Building automation system (10) according to claim 2, **characterized in that** the machine learning model (18) is a pretrained model, trained by data of other buildings.

4. Building automation system (10) according to one of the preceding claims, **characterized in that** a selection unit (54) is provided, for evaluating the recommendations of the machine learning model (18) and the process model (50) based regarding the previous probability of correctness of the recommendations of each model (18, 50) before the recommendation with the highest previous probability of correctness then is given to the user (34).

5. Method for automatically controlling the facility of a building with a building automation system (10) according to one of the preceding claims, comprising the steps of:
- Input of data (A) in a machine learning model (18) and/or a process model (50) created via data mining, the data comprising actual event data, actual sensor data, actual user context data (30), and actions manually created and/or predefined by the user (34) in relation to specific data values, in the automation system,
- Generating action recommendations (B) for the user (34) with the machine learning model (18) and/or the process model (50),
- Controlling actuators (D) of the building, if the actual data matches with predefined values (V_{P}) of the user (34),
- Outputting action recommendations (D) for the user (34), if no predefined values (V_{P}) are provided for the actual data, and
- Controlling actuators (E) of the building in line with the user's input.

6. Method according to claim 5, **characterized in that** the action recommendation of the process model (50) and the machine learning model (18) are evaluated (C) regarding the previous probability of correctness of the recommendations of each model (18, 50), before the recommendation with the highest previous probability of correctness then is given to the user (34).

7. Method according to claim 5 or 6, **characterized in that** the input data are generated from the user's input via a natural language processing.

8. Method for generating a model for a building automation system (10) for automatically controlling the facility of a building, comprising the steps of,
- Providing past data (K), comprising event data, sensor data, user context data (30) and actions manually created and/or predefined by the user (34) in relation to this data, and
- Supplying the data (L) to a model creating system, for creating a model (18, 50) so that the model (18, 50) outputs action recommendations for the user (34) and/or executing of actions.

9. Method for generating a model according to claim 8, **characterized in that** for the model creating system a machine learning system is used, which is trained by the data, wherein the training comprises the steps of:
- Comparing the determined action recommendations (M) with the action recommendation associated with the past data,
- Evaluating the deviations (N) of the determined action recommendations from the action recommendation associated with the past data with a cost function, and
- Adapting parameters (O) characterizing the behavior of the machine learning model (18) with the aim that further processing of the past data by the machine learning system is expected to improve the evaluation by the cost function.

10. Method for generating a model according to claim 8 **characterized in that** for the model creating system a data mining system is used, by which from similar past data and associated action recommendations, action recommendations for the actual data are extracted.

11. Method for generating a model according to claims 8 to 10, **characterized in that** the model during usage operation is further adapted by feedback information of a user.

12. Method for generating a model according to claims 8 to 11, **characterized in that** the data is gathered from different buildings and/or of the usage building.

13. One or more computer programs, containing machine-readable instructions that, when executed on one or more computers, cause the one or more computers to perform a method of any one of claims 8 to 12.

14. A non-transitory storage medium and/or a download product with the computer program of claim 13.

15. One or more computers with the computer program of claim 13 and/or with the non-transitory storage medium and/or download product of claim 14.
